# EUROPÄISCHE PATENTSCHRIFT

(11) **EP 1 717 257 B1**
(45) Veröffentlichungstag und Bekanntmachung des Hinweises auf die Patenterteilung: **11.03.2009**
(21) Anmeldenummer: 06007669.2
(22) Anmeldetag: 12.04.2006
(51) Int. Cl.: C08G 18/75, C08G 18/34, C08G 18/12, C08J 3/07, C09D 175/04, C08L 33/04

(54) **N-Methylpyrrolidon-freie Polyurethan-Dispersionen auf Basis von Dimethylolpropionsäure**
N-Methyl pyrrolidone-free polyurethane dispersons based on dimethylol propionic acid
Dispersions de polyuréthanes exemptes de N-méthyl-pyrrolidone à base de l'acide diméthylolpropionique

(30) Priorität: 25.04.2005 DE 102005019430
(43) Veröffentlichungstag der Anmeldung: 02.11.2006
(73) Patentinhaber: Bayer MaterialScience AG, 51368 Leverkusen (DE)
(72) Erfinder: Gertzmann, Rolf, Dr., 51377 Leverkusen (DE); Lühmann, Erhard, 29699 Bomlitz (DE); Kopp, Richard, Dr., 51061 Köln (DE)

(56) Entgegenhaltungen:
- EP-A- 0 204 938
- WO-A-93/24551
- DE-A1- 10 221 220
- US-A- 5 141 987
- US-B1- 6 610 779
- PATENT ABSTRACTS OF JAPAN Bd. 1995, Nr. 02, 31. März 1995 (1995-03-31) & JP 06 329744 A (SANYO CHEM IND LTD), 29. November 1994 (1994-11-29)

## Beschreibung

Die Erfindung betrifft wässrige Polyurethan-Dispersionen, die als Hydrophilierungsmittel Dimethylolpropionsäure enthalten und ohne Einsatz von N-Methylpyrrolidon hergestellt werden sowie deren Verwendung als Beschichtungsmittel mit hohen Beständigkeitseigenschaften.

Mit dem Ziel die Emissionen organischer Lösemittel zu senken, werden zunehmend wässrige Beschichtungsmittel an Stelle lösemittelhaltiger Systeme eingesetzt. Eine wichtige Klasse wässriger Lackbindemittel sind die Polyurethan-Dispersionen. Polyurethan-Dispersionen zeigen den Vorteil, dass sie wichtige Eigenschaften wie die Beständigkeit gegenüber Chemikalien und gegenüber mechanischer Belastung vereinen. Speziell im Bereich der Beschichtung mechanisch stark beanspruchter Flächen ist die Verwendung von Polyurethan-Dispersionen daher von Vorteil.

In Polyurethan-Dispersionen (PUD) wird Dimethylolpropansäure (DMPS), eine hochschmelzende Verbindung mit schlechten Löslichkeitseigenschaften, häufig als Hydrophilierungskomponente eingesetzt. Das bei der Herstellung der PUD hauptsächlich eingesetzte Aceton, ist jedoch nicht in der Lage, DMPS ausreichend zu lösen, wodurch das Hydrophilerungsmittel nur unzureichend in das Polymergerüst eingebaut wird. Die so hergestellten Dispersionen zeigen keine ausreichende Lagerstabilität. Daher wird im Stand der Technik DMPS in Verbindung mit N-Methylpyrrolidon (NMP) als Lösemittel für DMPS-haltige Polyurethane eingesetzt.

Neuere Untersuchungen zur Toxikologie von NMP zeigen jedoch, dass NMP als toxische Substanz einzustufen ist.

Aufgabe der vorliegenden Erfindung bestand somit in der Bereitstellung von NMP- und lösemittelfreien Polyurethan-Dispersionen, die als Hydrophilierungsmittel DMPS enthalten, die mehr als 8 Wochen bei 40°C lagerstabil sind und gegebenenfalls nur unter Zuhilfenahme von Koaleszenzhilfsmitteln transparente, glänzende Beschichtungen mit guten Beständigkeiten gegen Farbstoffe liefern.

DE-A 40 17 525 offenbart wässrige Polyurethanzubereitungen, in welchen ein Isocyanat-Gemisch aus keine lateralen Alkylgruppen aufweisenden Diisocyanaten und wenigstens eine laterale Alkylgruppe aufweisenden Diisocyanaten eingesetzt wird. In den Beispielen wird ein Gemisch aus 1-Isocyanat-3,3,5-trimethyl-5-isocyanatomethylcyclohexan und 4,4'-Diisocyanato-dicyclohexylmethan zur Herstellung des Polyurethans verwendet. Die hier eingesetzte ionische Verbindung ist N-(2-Aminoethyl)-2-aminoethancarbonsäure, die als wässrige Lösung vorliegt. Sie wird erst nach der Prepolymer-Herstellung mit dem Dispergierwasser zur abschließenden Kettenverlängerung und Hydrophilierung zugesetzt. Eine solche Vorgehensweise ist jedoch mit DMPS nicht möglich.

In der DE-A 10 221 220 werden Polyurethanzubereitungen beschrieben, die 10 bis 60 Gew.-% eines Polyurethans enthalten und zu Beschichtungen mit reduziertem Glanz führen. Das Polyurethan ist aufgebaut aus organischen Isocyanaten, die keine lateralen Alkylgruppen aufweisen. Gegebenenfalls können organische Isocyanate, die laterale Alkylgruppen aufweisen mit verwendet werden. Die Dispersionen, die zur Herstellung der Polyurethanzubereitungen dienen, sind sehr grobteilig und weisen ebenfalls nicht die geforderte Lagerstabilität auf.

Es wurde nun gefunden, dass durch Einsatz eines bestimmten Gemisches von Isocyanaten, bestehend aus 1-Isocyanat-3,3,5,-trimethyl-5-isocyanatomethylcyclohexan (IPDI) und 4,4'-Diisocyanato-dicyclohexylmethan, die in einem bestimmten Verhältnis zueinander in der Synthese des Polyurethans, basierend auf DMPS, eingesetzt werden, lagerstabile Produkte mit den zuvor genannten Eigenschaften erhalten werden.

Gegenstand der vorliegenden Erfindung sind wässrige, N-Methylpyrrolidon- und lösungsmittelfreie Polyurethan-Dispersionen, enthaltend
A) ein Gemisch aus 25 bis 90 Gew.-% 1-Isocyanat-3,3,5,-trimethyl-5-isocyanatomethylcyclohexan (IPDI) und 10 bis 75 Gew.-% 4,4'-Diisocyanato-dicyclohexylmethan,
B) ein oder mehrere Polyole mit mittleren Molgewichten (Mn) von 500 bis 3000,
C) ein oder mehrere, mindestens eine OH- oder NH-funktionelle Gruppe aufweisende Verbindungen, die eine Carboxyl- und/oder Carboxylatgruppe enthalten, wobei mindestens 50 mol.-%, bezogen auf die im Gesamtharz eingeführte Säuremenge aus Dimethyolpropionsäure besteht, sowie
D) ein oder mehrere Polyole und/oder Polyamine mit mittleren Molekulargewichten (Mn) unter 500 sowie
E) gegebenenfalls ein oder mehrere Monoalkohole und/oder Monoamine (E).

In einer weiteren Ausführungsform der vorliegenden Erfindung enthalten die erfindungsgemäßen Polyurethan-Dispersionen Polyester(meth)arcylate F) sowie ein oder mehrere Fotoinitiatoren G).

Die Polyurethan-Polymerteilchen der erfindungsgemäßen Polyurethan-Dispersionen weisen Größen von ≤ 120 nm, bevorzugt ≤ 100 nm und besonders bevorzugt ≤ 80 nm auf.

Die erfindungsgemäße Polyurethan-Dispersion enthält 5 bis 60 Gew.-%, bevorzugt 15 bis 57 Gew.-% und besonders bevorzugt 25 bis 55 Gew.-% an Komponente (A), 0,5 bis 65 Gew.-%, bevorzugt 2 bis 55 Gew.-% und besonders bevorzugt 5 bis 50 Gew.-% an Komponente (B), 0,5 bis 15 Gew.-%, bevorzugt von 2 bis 14 Gew.-% und besonders bevorzugt von 4 bis 12 Gew.-% an Komponente (C), 0,5 bis 18 Gew.-%, bevorzugt von 2 bis 12 Gew.-% und besonders bevorzugt von 4 bis 10 Gew.-% an Komponente (D) sowie 0 bis 10 Gew.-%, bevorzugt von 0 bis 7 Gew.-% und besonders bevorzugt von 0 bis 2 Gew.-% an Komponente (E), wobei sich die Prozentangaben auf das Gewicht des Harzfestkörpers beziehen und zu 100 Gew.-% addieren.

Eine weitere erfindungsgemäße Polyurethan-Dispersion enthält 5 bis 60 Gew.-%, bevorzugt 15 bis 57 Gew.-% und besonders bevorzugt 25 bis 55 Gew.-% an Komponente (A), 0,5 bis 65 Gew.-%, bevorzugt 2 bis 55 Gew.-% und besonders bevorzugt 5 bis 50 Gew.-% an Komponente (B), 0,5 bis 15 Gew.%, bevorzugt von 2 bis 14 Gew.-% und besonders bevorzugt von 4 bis 12 Gew.-% an Komponente (C), 0,5 bis 18 Gew.%, bevorzugt von 2 bis 12 Gew.-% und besonders bevorzugt von 4 bis 10 Gew.-% an Komponente (D), 0 bis 10 Gew.-%, bevorzugt von 0 bis 7 Gew.-% und besonders bevorzugt von 0 bis 2 Gew.-% an Komponente (E), 0,5 bis 15 Gew.-%, bevorzugt von 2 bis 12 Gew.-% und besonders bevorzugt von 4 bis 10 Gew.-% an Komponente (F) sowie 0,1 bis 10 Gew.-%, bevorzugt 0,5 bis 7 Gew.-% und besonders bevorzugt von 0,8 bis 5 Gew.-% an Komponente (G), wobei sich die Prozentangaben auf das Gewicht des Harzfestkörpers beziehen und zu 100 Gew.-% addieren.

Als Komponente (A) werden Mischungen von 1-Isocyanato-3,3,5-trimethyl-5-isocyanatomethylcyclohexan (Isophorondiisocyanat) und 4,4'-Diisocyanatodicyclohexylmethan im Verhältnis von 25 bis 90 Gew.-%, bevorzugt 35 bis 80 Gew.-% und besonders bevorzugt von 45 bis 70 Gew.-% IPDI zu 10 bis 75 Gew.-%, bevorzugt 65 bis 20 Gew.-% und besonders bevorzugt von 55 bis 30 Gew.-% 4,4'-Diisocyanato-dicyclohexylmethan eingesetzt.

Es ist möglich, anteilig bis zu 5 Gew.-%, bezogen auf das Polyurethanfestharz, drei- und/oder höherwertige Isocyanate einzusetzen, um somit einen gewissen Verzweigungs- oder Vernetzungsgrad des Polyurethans zu gewährleisten. Derartige Isocyanate werden z.B. erhalten, indem zweiwertige Isocyanate derart miteinander umgesetzt werden, dass ein Teil ihrer Isocyanatgruppen zu Isocyanurat-, Biuret-, Allophanat-, Uretdion- oder Carbodiimidgruppen derivatisiert werden. Auch solche über ionische Gruppen hydrophilierte Polyisocyanate sind geeignet. Derartige Polyisocyanate können hohe Funktionalitäten, z.B. von mehr als 3, aufweisen.

Geeignete polymere Polyole (B) im Molgewichtsbereich von 500 bis 3000, bevorzugt von 500 bis 2500 und besonders bevorzugt von 650 bis 2000 sind die üblicherweise zur Herstellung von Polyurethanen eingesetzten Polyole. Sie weisen eine OH-Funktionalität von 1,8 bis 5, bevorzugt von 1,9 bis 3 und besonders bevorzugt von 1,9 bis 2,0 auf. Es handelt sich zum Beispiel um Polyester, Polyether, Polycarbonate, Polyestercarbonate, Polyacetale, Polyolefine, Polyacrylate und Polysiloxane. Bevorzugt werden Polyester, Polyether, Polyestercarbonate und Polycarbonate eingesetzt. Besonders bevorzugt sind bifunktionelle Polyestercarbonate und Polycarbonate. Mischungen aus Polyestern und Polycarbonaten als polymere Polyole (B) sind ebenfalls besonders bevorzugt.

Als Komponente (C) wird mindestens 50 mol-%, bezogen auf die gesamte ins Harz eingeführte Säuremenge, Dimethylolpropionsäure eingesetzt. Des Weiteren können niedermolekulare (Mₙ < 300 g/mol) Carboxylgruppen enthaltende Verbindungen mit mindestens einer bis maximal 3 OH-Gruppen eingesetzt werden. Hierzu gehören z.B. Dimethylolbuttersäure, Hydroxypivalinsäure, N-(2-Aminoethyl)-2-aminoethancarbonsäure sowie Umsetzungsprodukte von (Meth-)acrylsäure und Polyaminen (siehe z.B. DE-A-19 750 186, S. 2, Z. 52 - 57).

Bevorzugt wird als Komponente (C) die Dimethylolpropionsäure als alleinige hydrophilierende Komponente eingesetzt.

Geeignete Komponenten (D) sind Polyole, Aminopolyole oder Polyamine mit einem Molgewicht unter 500, die als Kettenverlängerer Verwendung finden können, wie z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole, Trimethylolpropan, Glycerin sowie Hydrazin, Ethylendiamin, 1,4-Diaminobutan, Isophorondiamin, 4,4'-Diaminodicyclohexylmethan, Diethylentriamin, Triethylentetramin und N-Methyldiethanolamin. Bevorzugt als Komponente D) sind 1,4-Butandiol, 1,6-Hexandiol, Neopentylglykol, Cyclohexan-1,4-dimethanol, 1,4-Cyclohexandiol und Trimethylolpropan sowie Ethylendiamin, 1,4-Diaminobutan, Isophorondiamin und Diethylentriamin.

Neben dem Einsatz von gegenüber Isocyanaten reaktiven polyfunktionellen Verbindungen kommt auch die Terminierung des Polyurethan-Präpolymers mit monofunktionellen Alkoholen oder Aminen (E) in Betracht. Geeignete Verbindungen (E) sind aliphatische Monoalkohole und/oder Monoamine mit 1 bis 18 C-Atomen, wie z.B. Ethanol, 1-Propanol, 2-Propanol, primäres Butanol, sekundäres Butanol, n-Hexanol und dessen Isomere, 2-Ethylhexylalkohol, Ethylenglykolmonomethylether, Diethylenglykolmonomethylether, Ethylenglykolmonobutylether, Diethylenglykolmonobutylether, Propylenglykolmonomethylether, Dipropylenglykolmonomethylether, Tripropylenglykolmonomethylether, Dipropylenglykolmonopropylether, Propylenglykolmonobutylether, Dipropylenglykolmonobutylether, Tripropylenglykolmonobutylether, 1-Octanol, 1-Dodecanol, 1-Hexadecanol, Laurylalkohol und Stearylalkohol sowie Butylamin, Propylamin, Aminoethanol, Aminopropanol, Diethanolamin oder Dibutylamin. Bevorzugt werden Ethanol, n-Butanol, Ethylenglykolmonobutylether, 2-Ethylhexanol, 1-Octanol, 1-Dodecanol, 1-Hexadecanol, Butylamin, Propylamin, Aminoethanol, Dimethylethanolamin, Aminopropanol, Diethanolamin oder Dibutylamin eingesetzt. Besonders bevorzugt sind n-Butanol und Ethylenglykolmonobutylether.

Geeignete (meth-)acrylatfunktionelle Bindemittel F) sind solche, die Acrylsäureester- und/oder Methacrylsäureester-Einheiten beinhalten. Werden Komponenten F) als Bestandteil der erfindungsgemäßen Polyurethan-Dispersion eingesetzt, können diese dann als strahlenhärtbarer Bestandteil in Beschichtungen verwendet werden.

Als acrylatfunktionelle Bindemittel F) sind gegenüber NCO-Gruppen inerte Ester der Acrylsäure oder Methacrylsäure, bevorzugt der Acrylsäure mit mono- oder mehrfachfunktionellen Alkoholen geeignet. Als Alkohole eignen sich beispielsweise die isomeren Butanole, Pentanole, Hexanole, Heptanole, Octanole, Nonanole und Decanole, weiterhin cycloaliphatische Alkohole wie Isoborneol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit, Ditrimethylolpropan oder deren alkoxylierte Derivate.

Bevorzugte, gegenüber NCO-Gruppen inerte acrylatfunktionelle Bindemittel F) sind Hexandioldiacrylat, Tetraethylenglykoldiacrylat, Dipropylenglykoldiacrylat, Tripropylenglykoldiacrylat, Trimethylolpropantriacrylat, Trimethylolpropanethoxytriacrylat, Dimethylolpropantetraacrylat, Pentaerythritoltetraacrylat, Dipentaerythritolhexaacrylat und Ditrimethylolpropantetraacrylat.

Bevorzugt werden hydroxylgruppenhaltige Polyester(meth)acrylate mit einem OH-Gehalt von 30 bis 300 mg KOH/g, bevorzugt 60 bis 130 mg KOH/g eingesetzt.

Bei der Herstellung der hydroxyfunktionellen Polyester(meth)acrylate (F) können insgesamt 7 Gruppen von Monomerbestandteilen zur Anwendung kommen:
1. (Cyclo)Alkandiole (d.h. zweiwertige Alkohole mit (cyclo)aliphatisch gebundenen Hydroxylgruppen) des Molekulargewichtsbereichs 62 bis 286, wie z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem Molekulargewicht von 200 bis 4000, bevorzugt 300 bis 2000, besonders bevorzugt von 450 bis 1200. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs von 92 bis 254, wie z.B. Glycerin, Trimethylolpropan, Pentaerythrit, Dipentaerythrit und Sorbit oder auf diesen Alkoholen gestartete Polyether wie z.B. das Umsetzungsprodukt von 1 mol Trimethylolpropan mit 4 mol Ethylenoxid.
3. Monoalkohole wie z.B. Ethanol, 1- und 2-Propanol, 1- und 2-Butanol, 1- Hexanol, 2-Ethylhexanol, Cyclohexanol oder Benzylalkohol.
4. Dicarbonsäuren des Molekulargewichtsbereichs von 104 bis 600 und/oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bemsteinsäureanhydrid, Glutarsäure, Adipinsäure, Pimelinsäure, Korksäure, Sebacinsäure, Dodecandisäure oder hydrierte Dimerfettsäuren.
5. Höherfunktionelle Carbonsäuren bzw. deren Anhydride wie z.B. Trimellithsäure und Trimellithsäureanhydrid.
6. Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.
7. Acrylsäure, Methacrylsäure bzw. dimere Acrylsäure.

Hydroxylgruppenhaltigen Polyester(meth)acrylaten enthalten das Umsetzungsprodukt von mindestens einem Bestandteil aus Gruppe 1 und/oder 2 mit mindestens einem Bestandteil aus Gruppe 4 und/oder 5 und mindestens einem Bestandteil aus Gruppe 7.

Weiterhin ist es möglich, nach der Veresterung einen Teil von Carboxylgruppen, bevorzugt die der (Meth)acrylsäure, mit Mono-, Di- oder Polyepoxiden umzusetzen. Bevorzugte Epoxide sind beispielsweise die Epoxide (Glycidylether) von monomeren, oligomeren oder polymeren Bisphenol-A, Bisphenol-F, Hexandiol und/oder Butandiol oder deren ethoxilierten und/oder propoxilierten Derivaten. Diese Reaktion kann insbesondere zur Erhöhung der OH-Zahl des Polyester-(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g.

Alternativ können auch an sich bekannte hydroxylgruppenhaltige Epoxy(meth)acrylate, hydroxylgruppenhaltige Polyether(meth)acrylate oder hydroxylgruppenhaltige Polyurethan(meth)-acrylate mit OH-Gehalten von 20 bis 300 mg KOH/g eingesetzt werden sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Hydroxylgruppenhaltige Epoxy(meth)acrylate basieren bevorzugt auf Epoxiden (Glycidylether) von monomeren, oligomeren oder polymeren Bisphenol-A, Bisphenol-F, Hexandiol und/oder Butandiol bzw. der ethoxilierten und/oder propoxilierten Derivaten.

Geeignet als Komponente (F) sind ebenfalls mono-hydroxyfunktionelle Ester der Acryl- und/oder Methacrylsäure. Beispiele für solche Verbindungen sind die Mono-(Meth)acrylate zweiwertiger Alkohole wie z.B. Ethandiol, Oligoethylenglykol mit Mₙ < 300 g/mol, der isomeren Propandiole, Oligopropylenglykol mit Mₙ < 350 g/mol, Oligoethylenpropylenglykolen mit Mₙ < 370 g/mol und Butandiole oder (Meth)acrylate mehrwertiger Alkohole wie z.B. Trimethylolpropan, Glycerin und Pentaerythrit, die im Mittel eine freie Hydroxygruppe enthalten. Dispersionen, die ungesättigte (Meth)acrylate enthalten, eignen sich für eine Vernetzung durch energiereiche Strahlung, bevorzugt durch UV-Strahlung.

Als Fotoinitiatoren (G) eignen sich z.B. aromatische Ketonverbindungen wie Benzophenone, Alkylbenzophenone, 4,4'-Bis-(dimethylamino)-benzophenon (sog. Michlers Keton), Anthron und halogenierte Benzophenone. Weiter geeignet sind Acylphosphinoxide z.B. 2,4,6-Trimethylbenzoyldiphenylphosphinoxid, Phenylglyoxylsäureester, Anthrachinon und seine Derivate, Benzilketale und Hydroxyalkylphenone. Bevorzugte Fotoinitiatoren G) für Klarlacke sind Benzophenone und für pigmentierte Lacke Acylphosphinoxide. Es können auch Gemische dieser Verbindungen eingesetzt werden.

Gegenstand der vorliegenden Erfindung ist weiterhin ein Verfahren zur Herstellung der erfindungsgemäßen wässrigen Polyurethandispersionen, dadurch gekennzeichnet, dass die Komponenten (B), (C) (D) sowie gegebenenfalls (E) getrennt und in beliebiger Reihenfolge oder als Mischung mit Komponente(n) (A) umgesetzt werden, die Komponente C) vor, während oder nach der Überführung des Prepolymeren, das bevorzugt zu 99 bis 65 Gew.-%, besonders bevorzugt 95 bis 70 Gew.-%, ganz besonders bevorzugt 90 bis 80 Gew.-% gelöst im Lösungsmittel vorliegt, neutralisiert und das Prepolymer in Wasser dispergiert wird. Idealerweise werden aminofunktionelle Komponenten (E) nur dann zugesetzt, wenn die Reaktivität gegenüber Isocyanaten moderat ist und es somit nicht zum Vergelen des Ansatzes führt. Dabei kann sowohl die Komponente (A) als auch eine oder mehrere der Komponenten (B-E) vorgelegt werden. Bevorzugt wird die Komponente (A) vorgelegt und die Komponenten (B-E) werden zudosiert und mit Komponente (A) umgesetzt.

Als Lösemittel werden leichtflüchte Komponenten mit Siedepunkten unter 100°C verwendet, die später destillativ aus der Dispersion entfernt werden. Als Lösungsmittel eignen sich Aceton, Methylethylketon, Tetrahydrofuran und tert. Butylmethylether, bevorzugt ist Aceton.

"Lösungsmittelfrei" im Sinne der vorliegenden Anmeldung bedeutet, dass Lösungsmittelmengen von ≤ 0,9 Gew.-%, bevorzugt ≤ 0,5 Gew.-%, besonders bevorzugt ≤ 0,3 Gew.-% in der Dispersion verbleiben.

Gegenüber Isocyanaten unreaktive Komponenten F) werden bevorzugt nach der Umsetzung der Komponenten A) - E) dem entstandenen Prepolymer vor oder nach der Neutralisation der Komponente C), aber vor der Dispergierung des Prepolymers zugesetzt.

OH-Gruppen aufweisende Komponenten F) werden gemeinsam mit den Komponenten B) - E) zugesezt, so dass der Einbau in Polyurethangerüst gewährleistet ist. Mit der Dosierung der Komponente F) werden gegebenenfalls die dem Fachmann bekannten Polymerisationinhibitoren wie z.B. 2,6-Di-tert.-butyl-4-methylphenol zugesetzt, um eine frühzeitige Polymerisation der ungesättigten Einheiten zu vermeiden.

Geeignete Neutralisationsmittel sind alkalische organische und/oder alkalische anorganische Verbindungen. Bevorzugt sind neben wässriger Ammoniak-, Ethylamin- und Dimethylaminlösung flüchtige primäre, sekundäre und tertiäre Amine, wie z.B. Dimethylethanolamin, Morpholin, N-Methylmorpholin, Piperidin, Diethanolamin, Triethanolamin, Diisopropylamin, 2-Amino-2-methylpropanol und 2-N,N-Dimethylamino-2-methylpropanol oder Gemische dieser Verbindungen. Besonders bevorzugt sind gegenüber Isocyanaten unreaktive tertiäre Amine wie z.B. Triethylamin, Diisopropylethylamin und N-Methylmorpholin sowie Mischungen dieser tert. Amine, die bevorzugt dem Prepolymer vor der Dispergierung zugesetzt werden.

Je nach Neutralisationsgrad kann die Dispersion sehr feinteilig eingestellt werden, so dass sie praktisch das Aussehen einer Lösung hat. Auch der Feststoffgehalt der nach Destillation des Lösungsmittels erhaltenen Dispersion kann in weiten Grenzen von z.B. 20 bis 65 Gew.-% variiert werden. Ein bevorzugter Feststoffbereich erstreckt sich von 30 bis 50 Gew.-%. Besonders bevorzugt ist ein Feststoffgehalt von 33 bis 45 Gew.-%.

Überschüssige Isocyanatgruppen werden anschließend in der wässrigen Phase durch Umsetzung mit Verbindungen (D) kettenverlängert.

Die Menge der stickstoffhaltigen, isocyanatreaktiven Komponenten (D und/oder E), bevorzugt einer polyfunktionellen Komponente (D) oder einer Mischung polyfunktioneller Komponenten (D), wird so bemessen, dass 45 bis 125 Gew.-%, bevorzugt 50 bis 105 Gew.-%, besonders bevorzugt 55 bis 90 Gew.-% der Isocyanatgruppen abreagieren können. Die verbleibenden Isocyanatgruppen reagieren unter Kettenverlängerung mit dem anwesenden Wasser.

Gegebenenfalls kann vor der Applikation des Beschichtungsmittels, enthaltend die erfindungsgemäße Polyurethan-Dispersion, Vernetzer zugesetzt werden. Hierfür geeignet sind bevorzugt hydrophile und hydrophobe Polyisocyanatvernetzer. Bei den 2K-Systemen wird eine Aushärtung der erfindungsgemäßen Dispersionen bevorzugt mit den dem Fachmann bekannten hydrophilen und/oder hydrophoben Lackpolyisocyanaten durchgeführt. Bei Verwendung der Lackpolyisocyanate kann es notwendig werden, diese mit weiteren Colösermengen zu verdünnen, um eine gute Vermischung der Polyisocyanate mit der Dispersion zu erreichen.

Die erfindungsgemäßen Polyurethan-Dispersionen werden bevorzugt als Bindemittel in physikalisch und/oder UV-härtenden Beschichtungen und Klebstoffen verwendet. Beschichtungen auf Basis der erfindungsgemäßen Polyurethan-Dispersionen können auf beliebige Substrate aufgebracht werden, z.B. Holz, Metall, Kunststoff, Papier, Leder, Textilien, Filz, Glas oder mineralische Untergründe sowie auch auf bereits beschichtete Untergründe. Eine besonders bevorzugte Anwendung ist die Beschichtung von Holz- und Kunststoffböden, insbesondere PVC.

Die erfindungsgemäßen Polyurethan-Dispersionen können als solche oder in Kombination mit den aus der Lacktechnologie bekannten Hilfs- und Zusatzmitteln wie z.B. Füllstoffen, Pigmenten, Lösungsmitteln, Verlaufshilfsmitteln zur Herstellung von Beschichtungen verwendet werden.

Der Auftrag der Beschichtungsmittel enthaltend die erfindungsgemäße Polyurethandispersion kann auf bekannte Weisen, z.B. durch Streichen, Gießen, Rakeln, Spritzen, Sprühen (Vakumat), Schleudern, Walzen oder Tauchen erfolgen. Die Trocknung des Lackfilms kann bei Raumtemperatur oder erhöhter Temperatur stattfinden. Sind UV-härtende Bestandteile in den erfindungsgemäßen Dispersionen, so kann der Trocknungsprozess zusätzlich noch eine Bestrahlung mit UV-Licht beinhalten. Bevorzugt wird zunächst Wasser und gegebenenfalls weiteres Lösungsmittel mit bekannten Verfahren aus der Beschichtung entfernt, anschließend erfolgt die Bestrahlung mit UV-Licht und eventuell zuletzt eine weitere Trocknung oder Härtung.

### Beispiele

**Tabelle 1: Eingesetzte Komponenten**

| **Handelsname** | **Bezeichnung** | **Hersteller** |
|---|---|---|
| Desmodur® W | 4,4'-Diisocyanatodicyclo-hexylmethan, trans-trans Gehalt ca. 20 Gew % | Bayer MaterialScience AG, Leverkusen, DE |
| Desmodur® I | 1-Isocyanat-3,3,5-trimethyl-5-isocyanatomethylcyclohexan | Bayer MaterialScience AG, Leverkusen, DE |
| Desmophen®C 2200 | Polycarbonat (1,6-Hexandiol) F* 2, MG 2000 g/mol | Bayer MaterialScience AG, Leverkusen, DE |
| Desmophen®C 1200 | Polycarbonatester (1,6-Hexandiol, -Caprolacton) F* 2, MG 2000 g/mol | Bayer MaterialScience AG, Leverkusen, DE |
| Ebercryl® 140 | Ditrimethylolpropan-tetraacrylat | Cytec Surface Specialities, Hamburg, DE |
| Ebercryl® 600 | Bisphenol-A-diacrylat F* = 2, MG = 500 g/mol | Cytec Surface Specialities, Hamburg, DE |
| Comperlan® 100 | Kokosfettsäuremonoethanolamid | Cognis, Düsseldorf, DE |

| | | |
|---|---|---|
| F* = Funktionalität gegenüber Isocyanaten | | |

### Polyester-Oligomer-Vorstufe

In einem 5l-Reaktor mit Destillationsaufsatz werden 3200 g Ricinusöl und 1600 g Sojaöl sowie 2,4 g Dibutylzinnoxid eingewogen. Ein Stickstoffstrom (5 l/h) wird durch die Reaktanden geleitet. Innerhalb von 140 min. wird auf 240°C aufgeheizt. Nach 7 h bei 240°C wird abgekühlt. Die OH-Zahl beträgt 89 mg KOH/ g, die Säurezahl 2,5 mg KOH/ g.

### Beispiel 1

Eine Mischung aus 121,6 g Desmophen® C 2200, 56,1 g eines Polycarbonatdiols (basierend auf 1,6-Hexandiol und 1,4 Butandiol (25 : 75 Gew. Tl), MG. 1000 g/mol), 29,1 g Dimethylolpropionsäure, 39,0 g Neopentylglycol, 1,4 g Butylglykol und 160,6 g Aceton wurden auf 55°C aufgeheizt und gerührt. Dann wurden 117,9 g Desmodur® W und 116,6 g Desmodur® I zugegeben und auf 68°C aufgeheizt. Bei dieser Temperatur wurde gerührt, bis ein NCO-Gehalt von 3,4 % erreicht war. Im Anschluss wurde auf 60 °C abgekühlt und 22,0 g Triethylamin wurden zugegeben. 550 g dieser Lösung wurden unter heftigem Rühren in 546 g Wasser, das bei einer Temperatur von 35°C vorgelegt war, dispergiert. Nach Dispergierung wurde 5 min nachgerührt. Anschließend wurde innerhalb von 10 min eine Lösung von 5,0 g Hydrazinhydrat, 3,0 g Diethylentriamin und 1,3 g Ethylendiamin in 60,7 g Wasser zugegeben. Nach vollständiger Zugabe wurde für 20 min bei 40°C gerührt bevor das Aceton unter Vakuum bei dieser Temperatur destillativ entfernt wurde. Zur vollständigen Abreaktion der Isocyanatgruppen wurde bei 40°C gerührt, bis IR-spektroskopisch kein NCO mehr nachweisbar war. Nach Abkühlen auf <30°C wurde über ein 240 µm Schnellfilter der Fa. Erich Drehkopf filtriert.

### Kenndaten der Polyurethan-Dispersion:

| | |
|---|---|
| Mittlere Teilchengröße : | 29 nm |
| (Laserkorrelationsspektroskopie, LKS) | |
| pH (10% Fh, 20°C): | 8,7 |
| Festgehalt: | 39,0 % |
| Gewichtsverhältnis IPDI zu 4,4' Diisocyanatodicyclo-hexylmethan: | 50 : 50 |

### Beispiel 2

277,9 g Desmophen® C 2200, 27,0 g Dimethylolpropionsäure, 37,9 g Neopentylglycol, 1,2 g Butylglycol und 185,3 g Aceton wurden auf 55°C aufgeheizt und gerührt. Dann wurden 37,5 g Desmodur® W und 174,5 g Desmodur® I zugegeben und auf 70°C aufgeheizt. Bei dieser Temperatur wurde gerührt, bis ein NCO-Gehalt von 2,5 % erreicht war. Im Anschluss wurde auf 68°C abgekühlt und 20,3 g Triethylamin wurden zugegeben. 600 g dieser Lösung wurden unter heftigem Rühren in 726,0 g Wasser, das bei einer Temperatur von 35°C vorgelegt war, dispergiert. Nach Dispergierung wurde 5 min nachgerührt. Anschließend wurde innerhalb von 10 min eine Lösung von 4,0 g Hydrazinhydrat, 2,4 g Diethylentriamin und 1,0 g Ethylendiamin in 80,7 g Wasser zugegeben. Nach vollständiger Zugabe wurde für 20 min bei 40°C gerührt bevor das Aceton unter Vakuum bei dieser Temperatur abdestilliert wurde. Zur vollständigen Abreaktion der Isocyanatgruppen wurde bei 40°C gerührt, bis IR-spektroskopisch kein NCO mehr nachweisbar war. Nach Abkühlen auf <30°C wurde über ein 240 µm Schnellfilter der Fa. Erich Drehkopf filtriert.

### Kenndaten der Polyurethan-Dispersion:

| | |
|---|---|
| Mittlere Teilchengröße (LKS): | 38 nm |
| pH (10% Fh, 20°C): | 8,5 |
| Festgehalt: | 37,4 % |
| Gewichtsverhältnis IPDI zu 4,4' Diisocyanato-dicyclohexylmethan : | 82 : 18 |

### Beispiel 3

152,1 g Desmodur® W und 348,7 g Desmodur® I wurden auf 55°C aufgeheizt und gerührt. Dann wurde 62,2g Dimethylolpropionsäure zugegeben. Nach 5 min wurde eine Lösung aus 470,4 g Desmophen® C 1200, 96,3 g Neopentylglykol, 2,8 g Butylglycol und 377,5 g Aceton innerhalb von 20 min zugegeben und auf 68°C aufgeheizt. Bei dieser Temperatur wurde gerührt, bis ein NCO-Gehalt von 2,8 % erreicht war. Im Anschluss wurde auf 60°C abgekühlt und 46,9 g Triethylamin wurden zugegeben. 450 g dieser Lösung wurden unter heftigem Rühren in 545,9 g Wasser, das bei einer Temperatur von 35°C vorgelegt war, dispergiert. Nach Dispergierung wurde 5 min nachgerührt. Anschließend wurde innerhalb von 10 min eine Lösung von 2,0 g Diethylentriamin, 1,1 g n-Butylamin und 3,5 g Ethylendiamin in 60,7 g Wasser zugegeben. Nach vollständiger Zugabe wurde für 20 min bei 40°C gerührt bevor das Aceton unter Vakuum bei dieser Temperatur abdestilliert wurde. Zur vollständigen Abreaktion der Isocyanatgruppen wurde bei 40°C gerührt, bis IR-spektroskopisch kein NCO mehr nachweisbar war. Nach Abkühlen auf <30°C wurde über ein 240 µm Schnellfilter der Fa. Erich Drehkopf filtriert.

### Kenndaten der Polyurethan-Dispersion:

| | |
|---|---|
| Mittlere Teilchengröße (LKS): | 25 nm |
| pH (10% Fh, 20°C): | 7,9 |
| Festgehalt: | 35,9 % |
| Gewichtsverhältnis IPDI zu 4,4' Diisocyanatodicyclo-hexylmethan : | 70 : 30 |

### Beispiel 4 (acrylgruppenhaltige Dispersion)

71,7 g Desmodur® W und 163,9 g Desmodur® I wurden auf 55°C aufgeheizt und gerührt. Dann wurde 29,2g Dimethylolpropionsäure zugegeben. Nach 5 min wurde eine Lösung aus 226,0 g Desmophen® C 1200, 45,2 g Neopentylglycol, 1,3 g Butylglykol und 177,3 g Aceton innerhalb von 20 min zugegeben und auf 68°C aufgeheizt. Bei dieser Temperatur wurde gerührt, bis ein NCO-Gehalt von 2,8 % erreicht war. Im Anschluss wurde auf 40°C abgekühlt und 22,1 g Triethylamin wurden zugegeben und für 5 Minuten verrührt. Im Anschluß wurden 26.9 g Ebecryl® 140 addiert und für weitere 5 Minuten eingerührt. 760 g dieser Lösung wurden unter heftigem Rühren in 924 g Wasser, das bei einer Temperatur von 35°C vorgelegt war, dispergiert. Nach Dispergierung wurde 5 min nachgerührt. Anschließend wurde innerhalb von 10 min eine Lösung von 4,7 g Diethylentriamin, 1,7 g n-Butylamin und 4,4 g Ethylendiamin in 102,7 g Wasser zugegeben. Nach vollständiger Zugabe wurde für 20 min bei 40°C gerührt bevor das Aceton unter Vakuum bei dieser Temperatur abdestilliert wurde. Zur vollständigen Abreaktion der Isocyanatgruppen wurde bei 40°C gerührt, bis IR-spektroskopisch kein NCO mehr nachweisbar war. Nach Abkühlen auf <30 °C wurde über ein 240 µm Schnellfilter der Fa. Erich Drehkopf filtriert.

### Kenndaten der Polyurethan-Dispersion:

| | |
|---|---|
| Mittlere Teilchengröße (LKS): | 30 nm |
| pH (10% Fh, 20°C): | 8,3 |
| Festgehalt: | 36,4 % |
| Gewichtsverhältnis IPDI zu 4,4' Diisocyanatodicyclo-hexylmethan: | 70 : 30 |

### Beispiel 5 (acrylgruppenhaltige Dispersion)

71,7 g Desmodur® W und 163,9 g Desmodur® I wurden auf 55°C aufgeheizt und gerührt. Dann wurde 29,2g Dimethylolpropionsäure zugegeben. Nach 5 min wurde eine Lösung aus 226,0 g Desmophen® C 1200, 39,8 g Neopentylglycol, 1,3 g Butylglykol, 26,7g Ebecryl® 600, 0,6 g 2,6 Di-tert.-butyl-4-methylphenol und 177,3 g Aceton innerhalb von 20 min zugegeben und auf 60°C aufgeheizt. Bei dieser Temperatur wurde gerührt, bis ein NCO-Gehalt von 2,7 % erreicht war. Im Anschluss wurde auf 40°C abgekühlt und 22,1 g Triethylamin wurden zugegeben und für 5 Minuten verrührt. 760 g dieser Lösung wurden unter heftigem Rühren in 924 g Wasser, das bei einer Temperatur von 35°C vorgelegt war, dispergiert. Nach Dispergierung wurde 5 min nachgerührt. Anschließend wurde innerhalb von 10 min eine Lösung von 4,7 g Diethylentriamin, 1,7 g n-Butylamin und 4,4 g Ethylendiamin in 102,7 g Wasser zugegeben. Nach vollständiger Zugabe wurde für 20 min bei 40°C gerührt bevor das Aceton unter Vakuum bei dieser Temperatur abdestilliert wude. Zur vollständigen Abreaktion der Isocyanatgruppen wurde bei 40°C gerührt, bis IR-spektroskopisch kein NCO mehr nachweisbar war. Nach Abkühlen auf <30°C wurde über ein 240 µm Schnellfilter der Fa. Erich Drehkopf filtriert.

### Kenndaten der Polyurethan-Dispersion:

| | |
|---|---|
| Mittlere Teilchengröße (LKS): | 42 nm |
| pH (10% Fh, 20°C): | 8,0 |
| Festgehalt: | 35,5 % |
| Gewichtsverhältnis IPDI zu 4,4' Diisocyanatodicyclo-hexylmethan : | 70 : 30 |

### Vergleichsbeispiel 6

208,6 g Desmophen® C 1200, 35,1 g Dimethylolpropionsäure, 28,6 g Neopentylglycol, 2,3 g Comperlan® 100 und 171,9 g Aceton wurden auf 55°C aufgeheizt und gerührt. Dann wurden 206,1 g Desmodur® W und 35,1 g Desmodur® I zugegeben und auf 68°C aufgeheizt. Bei dieser Temperatur wurde gerührt, bis ein NCO-Gehalt von 3,6 % erreicht war. Im Anschluss wurde auf 60°C abgekühlt und 22,0 g Ethyldiisopropylamin wurden zugegeben. 600 g dieser Lösung wurden unter heftigem Rühren in 793,4 g Wasser, das bei einer Temperatur von 35°C vorgelegt war, dispergiert. Nach Dispergierung wurde 5 min nachgerührt. Anschließend wurde innerhalb von 10 min eine Lösung von 4,4 g Hydrazinhydrat, 3,9 g Diethylentriamin und 3,7 g Ethylendiamin in 88,2 g Wasser zugegeben. Nach vollständiger Zugabe wurde für 20 min bei 40°C gerührt bevor das Aceton unter Vakuum bei dieser Temperatur abdestilliert wurde. Zur vollständigen Abreaktion der Isocyanatgruppen wurde bei 40°C gerührt, bis IR-spektroskopisch kein NCO mehr nachweisbar war. Nach Abkühlen auf <30°C wurde über ein 240 µm Schnellfilter der Fa. Erich Drehkopf filtriert. Die Dispersion war nicht stabil und sedimentierte nach kurzer Zeit.

| | |
|---|---|
| Festgehalt: | 34,0 % |
| Gewichtsverhältnis IPDI zu 4,4' Diisocyanatodicyclo-hexylmethan : | 15 : 85 |

### Vergleichsbeispiel 7 (analog Bsp. aus DE 4017525)

216,7 g eines Polyesters aus Adipinsäure, 1,6-Hexandiol und Neopentylglycol (OH-Zahl 56 mg KOH/g), 49,5 g 1,4-Butandiol und 150,0 g Aceton wurden auf 55°C aufgeheizt und gerührt. Dann wurden 142,0 g Desmodur® W und 39,9 g Desmodur® I zugegeben und 30 min bei 55°C gerührt. Dann wurden 0,1 g Dibutylzinndilaurat zugegeben und auf 70°C aufgeheizt. Bei dieser Temperatur wurde 1 h gerührt bis weitere 200,0 g Aceton zugegeben wurden. Anschließend wurde 2 h bei 63°C gerührt bis ein NCO-Gehalt von 0,7 % erreicht war. Im Anschluss wurde auf 50°C abgekühlt und 200,0 g Aceton wurden addiert. Zu dem auf 50 °C temperierten Prepolymer wurde dann innerhalb von 5 min 26,4 g einer 40 gew.-%igen wässrigen Lösung des Na-Salzes der N-(2-Aminoethyl)-2-aminoethancarbonsäure und 56,2 g Wasser gegeben. Nach 15 min wurde unter heftigem Rühren 615,0 g Wasser innerhalb von 5 min addiert. Nach vollständiger Zugabe wurde für 20 min gerührt bevor das Aceton unter Vakuum bei 40°C abdestilliert wurde. Die Dispersion war nicht stabil und sedimentierte nach einem Tag bei Lagerung bei Raumtemperatur.

### Kenndaten der Polyurethan-Dispersion:

| | |
|---|---|
| Mittlere Teilchengröße : | 756 nm |
| Festgehalt: | 40 % |
| Gewichtsverhältnis IPDI zu 4,4' Diisocyanatodicyclo-hexylmethan : | 22 : 78 |

### Vergleichsbeispiel 8

216,7 g eines Polyesters aus Adipinsäure, 1,6-Hexandiol und Neopentylglycol (OH-Zahl 56 mg KOH/g), 41,7 g 1,4-Butandiol, 8,8 g Dimethylolpropionsäure und 150,0 g Aceton wurden auf 55°C aufgeheizt und gerührt. Dann wurden 142,0 g Desmodur® W und 39,9 g Desmodur® I zugegeben und 30 min bei 55°C gerührt. Dann wurden 0,1 g Dibutylzinndilaurat zugegeben und auf 63-68°C aufgeheizt. Bei dieser Temperatur wurde gerührt bis ein NCO-Gehalt von 2,2 % erreicht war. Im Anschluss wurde auf 50°C abgekühlt und 401,2 g Aceton wurden addiert. Zu dem auf 50°C temperierten Prepolymer wurde dann innerhalb von 5 min eine Lösung aus 8,7 g 2-Methyl-1,5-pentan-diamin und 68,0 g Wasser gegeben. Nach 15 min wurde 6,7 g Triethylamin addiert 10 min gerührt. Anschließend wurde unter heftigem Rühren 612,0 g Wasser innerhalb von 5 min addiert. Nach vollständiger Zugabe wurde für 20 min gerührt bevor das Aceton unter Vakuum bei 40°C abdestilliert wurde. Zur vollständigen Abreaktion der Isocyanatgruppen wurde bei 40°C gerührt, bis IR-spektroskopisch kein NCO mehr nachweisbar war. Die erhaltene Dispersion war nach Abkühlen auf <30°C nicht über ein 1000 µm Schnellfilter der Fa. Erich Drehkopf filtrierbar.

### Kenndaten der Polyurethan-Dispersion:

| | |
|---|---|
| Mittlere Teilchengröße : | 453 nm |
| (Laserkorrelationsspektroskopie, LKS) | |
| pH (10% Fh, 20°C): | 9,7 |
| Festgehalt: | 40,6% |
| Gewichtsverhältnis IPDI zu 4,4' Diisocyanatodicyclohexylmethan : | 22 : 78 |

### Beständigkeitsprüfungen der Beschichtungen

Filzstücke werden mit Kaffeelösung gemäß DIN 68861, Rotwein (Alkoholgehalt: min 12 Vol-% , max 13 Vol-%) oder Ethanol (48%-ig) getränkt und für 24 h auf die Beschichtung gelegt und mit einem Deckel zugedeckt. Nach der Belastungszeit von 24 h wird das Filzstück entfernt, die Fläche abgetupft und beurteilt.

Die mit Rotwein oder Kaffee belasteten Flächen werden anschließend mit einer Lösung (15 ml Reinigungskonzentrat/ 1 Liter Wasser (z.B.: Falterol Spül- und Reinigungskonzentrat, Fa. Falter Chemie Krefeld)) gereinigt.

Die Kältebruchflexibilität wird bestimmt, indem ein beschichtetes, flexibles Substrat für eine Stunde bei -18°C gelagert wird und unmittelbar nach der Lagerung über eine Tischkante um 90° geknickt wird. Die Beurteilung erfolgt nach folgender Skala:

| | |
|---|---|
| 100 % | keine sichtbaren Veränderungen |
| 75 % | nicht gebrochen, nur Risse |
| 50 % | gebrochen, einzelne Risse (besenartig) |
| 25 % | gebrochen, mehrere Risse |
| 0 % | glatter Bruch |

Bei ausreichender Scherung wird die Dispersion aus Beispiel 4 mit 2,5 Gew.-% (bezogen auf Bindemittel Feststoff) Irgacure® 500 (Fotoinitiator, Fa. Ciba-Geigy, Lampertheim, DE), und 0,8 Gew.% (bezogen auf Bindemittel Feststoff) BYK® 346 (Fa. Byk, Wesel, DE) versetzt und ca. 5 min nachdispergiert. Die applizierte und getrocknete Beschichtung (1h bei Raumtemperatur) wird im UV- Tunnel (Quecksilberdampflampe, 5 m/min.) vernetzt.

**Tabelle 2: Beständigkeitseigenschaften der Beschichtung nach Trocknung des Lacks für 24 h bei 20°C; Naßfilmschichtdicke 180 µm.**

| | Beispiel 1 | Beispiel 3 | Beispiel 4 | Vergleichbeispiel 6 |
|---|---|---|---|---|
| Kaffebeständigkeit | 4 | 4 | 5 | 2 |
| Rotweinbeständigkeit | 4 | 3 | 4 | 3 |
| Ethanolbeständigkeit | 3 | 3 | 3 | 3 |
| Kältbruchflexibilität | 75 % | 100 % | 100 % | 75 % |

| | | | | |
|---|---|---|---|---|
| Noten: 5 entspricht keiner Veränderung des Films 0 völlige Verfärbung des Untergrunds | | | | |

## Patentansprüche

1. Wässrige, N-Methylpyrrolidon- und lösungsmittelfreie Polyurethan-Dispersionen, erhältlich aus
A) einem Gemisch aus 25 bis 90 Gew.-% 1-Isocyanat-3,3,5,-trimethyl-5-isocyanatomethylcyclohexan (IPDI) und 10 bis 75 Gew.-% 4,4'-Diisocyanato-dicyclohexylmethan,
B) einem oder mehreren Polyolen mit mittleren Molgewichten (Mn) von 500 bis 3000,
C) einer oder mehreren, mindestens eine OH- oder NH-funktionelle Gruppe aufweisenden Verbindungen, die eine Carboxyl- und/oder Carboxylatgruppe enthalten, wobei mindestens 50 mol.-%, bezogen auf die im Gesamtharz eingeführte Säuremenge aus Dimethylolpropionsäure besteht, sowie
D) einem oder mehreren Polyolen und/oder Polyaminen mit mittleren Molekulargewichten (Mn) unter 500, sowie
E) gegebenenfalls einem oder mehreren Monoalkoholen und/oder Monoaminen (E).

2. Wässrige, N-Methylpyrrolidon- und lösungsmittelfreie Polyurethan-Dispersionen gemäß Anspruch 1, **dadurch gekennzeichnet, dass** diese Polyester(meth)arcylate F) sowie ein oder mehrere Fotoinitiatoren G) enthalten.

3. Wässrige, N-Methylpyrrolidon- und lösungsmittelfreie Polyurethan-Dispersionen gemäß Anspruch 1, **dadurch gekennzeichnet, dass** die Polyurethan-Polymerteilchen ein Größe von ≤ 120 nm aufweisen.

4. Wässrige, N-Methylpyrrolidon- und lösungsmittelfreie Polyurethan-Dispersionen gemäß Anspruch 1, **dadurch gekennzeichnet, dass** die Komponente B) Polyester, Polyether, Polyestercarbonate und Polycarbonate sind.

5. Wässrige, N-Methylpyrrolidon- und lösungsmittelfreie Polyurethan-Dispersionen gemäß Anspruch 1, **dadurch gekennzeichnet, dass** die Komponente B) Mischungen aus Polyestern und Polycarbonaten sind.

6. Wässrige, N-Methylpyrrolidon- und lösungsmittelfreie Polyurethan-Dispersionen gemäß Anspruch 1, **dadurch gekennzeichnet, dass** die Komponente C) ausschließlich Dimethylolpropionsäure ist.

7. Verfahren zur Herstellung der wässrigen Polyurethandispersion gemäß Anspruch 1, **dadurch gekennzeichnet, dass** die Komponenten (B), (C) (D) sowie gegebenenfalls (E) getrennt und in beliebiger Reihenfolge oder als Mischung mit Komponente(n) (A) umgesetzt werden, die Komponente C) vor, während oder nach der Überführung des Prepolymeren, das zu 99 bis 65 Gew.-% gelöst im Lösungsmittel vorliegt, in Wasser neutralisiert und das Prepolymer in Wasser dispergiert wird.

8. Verwendung der wässrigen Polyurethandispersion gemäß Anspruch 1 als Bindemittel zur Herstellung von physikalisch und/oder UV-härtenden Beschichtungen und Klebstoffen.

9. Verwendung der wässrigen Polyurethandispersion gemäß Anspruch 1 zur Beschichtung von Holz- und Kunststoffböden.

## Claims

1. Aqueous, N-methylpyrrolidone- and solvent-free polyurethane dispersions, obtainable from
A) a mixture of from 25 to 90 wt.% 1-isocyanate-3,3,5-trimethyl-5-isocyanatomethylcyclohexane (IPDI) and from 10 to 75 wt.% 4,4'-diisocyanato-dicyclohexylmethane,
B) one or more polyols having mean molar weights (Mn) of from 500 to 3000,
C) one or more compounds having at least one OH- or NH-functional group and containing a carboxyl and/or carboxylate group, at least 50 mol%, based on the amount of acid introduced into the resin as a whole, consisting of dimethylolpropionic acid, and
D) one or more polyols and/or polyamines having mean molecular weights (Mn) below 500, and
E) optionally one or more monoalcohols and/or monoamines (E).

2. Aqueous, N-methylpyrrolidone- and solvent-free polyurethane dispersions according to claim 1, **characterised in that** they contain polyester (meth)acrylates F) and also one or more photoinitiators G).

3. Aqueous, N-methylpyrrolidone- and solvent-free polyurethane dispersions according to claim 1, **characterised in that** the polyurethane polymer particles have a size of ≤ 120 nm.

4. Aqueous, N-methylpyrrolidone- and solvent-free polyurethane dispersions according to claim 1, **characterised in that** component B) is polyesters, polyethers, polyester carbonates and polycarbonates.

5. Aqueous, N-methylpyrrolidone- and solvent-free polyurethane dispersions according to claim 1, **characterised in that** component B) is mixtures of polyesters and polycarbonates.

6. Aqueous, N-methylpyrrolidone- and solvent-free polyurethane dispersions according to claim 1, **characterised in that** component C) is dimethylolpropionic acid on its own.

7. Process for the preparation of the aqueous polyurethane dispersion according to claim 1, **characterised in that** components (B), (C), (D) and optionally (E) are reacted with component(s) (A) separately and in any desired order or in the form of a mixture, component C) is neutralised in water before, during or after the conversion of the prepolymer, which is present dissolved in the solvent to the extent of 99 to 65 wt.%, and the prepolymer is dispersed in water.

8. Use of the aqueous polyurethane dispersion according to claim 1 as a binder for the production of physically curing and/or UV-curing coatings and adhesives.

9. Use of the aqueous polyurethane dispersion according to claim 1 in the coating of substrates of wood and plastics material.

## Revendications

1. Dispersions aqueuses de polyuréthannes, exemptes de N-méthylpyrrolidone et de solvant, obtenues à partir de
A) un mélange de 25 à 90% en poids de 1-isocyanato-3,3,5-triméthyl-5-isocyanatométhylcyclohexane (IPDI) et de 10 à 75% en poids de 4,4'-diisocyanatodicyclohexylméthane,
B) un ou plusieurs polyols ayant des poids moléculaires (Mn) moyens allant de 500 à 3000,
C) un ou plusieurs composés présentant au moins un radical à fonction OH ou NH, qui contiennent un radical carboxyle et/ou carboxylate, où au moins 50% en moles, sur base de la quantité d'acide introduite dans la résine totale, consistent en l'acide diméthylol-propionique,
D) un ou plusieurs polyols et/ou polyamines ayant des poids moléculaires (Mn) moyens inférieurs à 500, ainsi que
E) le cas échéant, un ou plusieurs monoalcools et/ou monoamines.

2. Dispersions aqueuses de polyuréthannes, exemptes de N-méthylpyrrolidone et de solvant, selon la revendication 1, **caractérisées en ce que** celles-ci contiennent des polyester-méthacrylates (F) ainsi qu'un ou plusieurs photoinitiateurs (G).

3. Dispersions aqueuses de polyuréthannes, exemptes de N-méthylpyrrolidone et de solvant, selon la revendication 1, **caractérisées en ce que** les particules polymères de polyuréthanne présentent une taille ≤ 120 nm.

4. Dispersions aqueuses de polyuréthannes, exemptes de N-méthylpyrrolidone et de solvant, selon la revendication 1, **caractérisées en ce que** les composants B) sont des polyesters, des polyéthers, des polyester-carbonates et des polycarbonates.

5. Dispersions aqueuses de polyuréthannes, exemptes de N-méthylpyrrolidone et de solvant, selon la revendication 1, **caractérisées en ce que** les composants B) sont des mélanges de polyesters et de polycarbonates.

6. Dispersions aqueuses de polyuréthannes, exemptes de N-méthylpyrrolidone et de solvant, selon la revendication 1, **caractérisées en ce que** le composant C) est exclusivement l'acide diméthylol-propionique.

7. Procédé de préparation de dispersions aqueuses de polyuréthannes selon la revendication 1, **caractérisé en ce que** les composants (B), (C), (D) ainsi que le cas échéant, (E) sont mis à réagir, séparément et en ordre quelconque, ou sous forme de mélange, avec le ou les composants (A), le composants (C) est neutralisé dans l'eau avant, pendant ou après la transformation du prépolymère, qui est présent dissous dans un solvant pour 99 à 65% en poids, et le prépolymère est dispersé dans l'eau.

8. Utilisation des dispersions aqueuses de polyuréthannes selon la revendication 1, comme liant pour la préparation de revêtements et colles durcissant de manière physique et/ou aux U.V.

9. Utilisation des dispersions aqueuses de polyuréthannes selon la revendication 1, pour le revêtement de substrats en bois et en matières plastiques.
